# FASCICULE DE BREVET EUROPEEN

(11) **EP 1 584 785 B1**
(45) Date de publication et mention de la délivrance du brevet: **25.02.2015**
(21) Numéro de dépôt: 05290549.4
(22) Date de dépôt: 11.03.2005
(51) Int. Cl.: F16F 15/34, F01D 5/02

(54) **Dispositif d'équilibrage d'une pièce en rotation d'un rotor de turboreacteur**
Kompensationsmasse zur Auswuchtung eines Rotors für einen Rotor eines Flugtriebwerks
Balancing weight for a rotor for a rotor of a jet engine

(30) Priorité: 09.04.2004 FR 0403736
(43) Date de publication de la demande: 12.10.2005
(73) Titulaire: SNECMA, 75015 Paris (FR)
(72) Inventeur: Charrier, Emmanuel B. M., 77115 Blandy les Tours (FR); Pabion, Philippe J-P., 77530 Vaux le Penil (FR); Soupizon, Jean-Luc, 77530 Vaux le Penil (FR)
(74) Mandataire: Ramey, Daniel

(56) Documents cités:
- EP-A- 0 169 799
- FR-A- 2 641 031
- US-A- 3 656 865
- US-A- 4 803 893
- US-A- 4 879 792

## Description

La présente invention concerne un dispositif d'équilibrage d'une pièce en rotation selon la revendication 1 en particulier d'un rotor de turbine dans une turbomachine telle qu'un turboréacteur ou analogue. turbomachine telle qu'un turboréacteur ou analogue.

Il est bien connu dans la technique de corriger le balourd d'une pièce tournante grâce à une masse d'équilibrage que l'on fixe sur la pièce par un moyen approprié quelconque (voir par exemple les documents US-A-4,803,893 et US-A-4,879,792).

Dans une turbine basse-pression d'un turboréacteur, qui comprend des disques rotatifs portant des aubes et fixés les uns aux autres par des brides annulaires, des masses d'équilibrage sont fixées sur une bride annulaire amont du disque amont et / ou sur une bride annulaire aval du disque aval, au moyen de boulons.

Ce mode de fixation impose qu'il y ait un espace libre suffisant, entre la bride annulaire amont et le disque amont, pour le passage d'un outil de serrage des écrous sur les boulons. Cela se traduit par un encombrement axial en amont de la turbine que l'on ne peut réduire et qui gène la mise en place d'un distributeur.

L'invention a notamment pour but d'éviter ces inconvénients tout en réduisant le poids des moyens de fixation des masses d'équilibrage sur les disques rotatifs d'une telle turbine ou d'une turbomachine.

Elle propose à cet effet un dispositif d'équilibrage d'une pièce en rotation, en particulier d'un rotor de turbine dans une turbomachine telle qu'un turboréacteur ou analogue, ce dispositif comprenant au moins une masse d'équilibrage montée sur une bride annulaire de la pièce et des moyens de fixation de la masse d'équilibrage sur ladite bride annulaire, caractérisé en ce que la masse d'équilibrage comprend des moyens d'accrochage sur la bride annulaire de la pièce et en ce que des moyens de verrouillage sont associés à la masse d'équilibrage et à la bride annulaire pour immobiliser la masse d'équilibrage sur la bride annulaire et pour se bloquer en rotation et en translation axiale sur la masse d'équilibrage.

Le dispositif selon l'invention permet de :
o ne plus utiliser les outils de serrage d'écrous de la technique antérieure ;
o diminuer en conséquence l'encombrement axial, ce qui dans une turbine améliore l'intégration du distributeur en amont du disque amont de la turbine ;
o diminuer le poids du dispositif d'équilibrage d'un rotor, typiquement de 1,4 kg pour un turboréacteur fabriqué par la déposante.

Selon une caractéristique de l'invention, la masse d'équilibrage comprend sur sa face tournée vers la bride annulaire, au moins un crochet en L d'engagement sur un rebord annulaire de ladite bride annulaire.

Ce crochet forme les moyens d'accrochage précités et constitue également un moyen de retenue axiale de la masse d'équilibrage sur la bride de la pièce.

De préférence, la masse d'équilibrage comprend, à ses extrémités radialement interne et externe, des crochets en L orientés l'un vers l'autre et destinés à s'engager sur deux rebords annulaires concentriques de ladite bride annulaire.

Cette configuration améliore la retenue axiale de la masse d'équilibrage sur la bride annulaire.

Avantageusement, au moins l'un des rebords annulaires comprend une interruption ou une encoche permettant la mise en place et l'engagement de la masse d'équilibrage sur la bride annulaire par translation axiale.

Cela facilite la mise en place de la masse d'équilibrage sur la pièce.

Selon une autre caractéristique de l'invention, les moyens de verrouillage sont rapportés sur la masse d'équilibrage et comprennent un pion cylindrique destiné à s'engager axialement dans un orifice de la masse d'équilibrage et dans un orifice correspondant de la bride annulaire, et des moyens d'immobilisation axiale et en rotation sur la masse d'équilibrage.

Dans un mode de réalisation de l'invention, les moyens d'immobilisation en rotation comprennent une languette déformable destinée à être engagée, par déplacement dans une direction parallèle à l'axe de rotation de la pièce, entre deux butées voisines formées sur la masse d'équilibrage.

La déformation de la languette et son engagement entre les butées de la masse d'équilibrage, assurent de façon simple une immobilisation en rotation des moyens de verrouillage sur la masse d'équilibrage.

Les moyens d'immobilisation axiale comprennent une tête plate transversale formée à une extrémité du pion et destinée à venir en appui sur la masse d'équilibrage et à s'engager par rotation autour de l'axe du pion sous un rebord de la masse d'équilibrage.

De façon simple, la languette précitée est formée par une découpe de la tête plate du pion cylindrique.

Le verrouillage de la masse d'équilibrage sur la bride annulaire est donc réalisé par rotation du pion cylindrique autour de son axe, jusqu'à une position de blocage où la tête du pion est insérée sous le rebord de la masse d'équilibrage, la languette étant ensuite engagée entre les deux butées voisines de la masse d'équilibrage.

De préférence, la languette a une longueur suffisante pour faire saillie au-delà des butées de la masse d'équilibrage en position de blocage, ce qui facilite le démontage des moyens de verrouillage par retour de la languette dans sa position initiale.

Selon une autre caractéristique de l'invention, le pion des moyens de verrouillage est monté serré dans l'orifice de la bride annulaire précitée et avec jeu dans l'orifice de la masse d'équilibrage.

Cela permet d'éviter un jeu entre le pion cylindrique et la bride annulaire, qui pourrait être la cause de vibrations et d'une usure prématurée de la bride annulaire et des moyens de verrouillage.

Dans un mode de réalisation particulier de l'invention, la bride annulaire comprend un nombre prédéterminé d'orifices de montage d'une masse d'équilibrage, ce nombre étant par exemple de 24, ces orifices étant répartis de façon régulière sur la bride annulaire.

Cela permet de monter la masse d'équilibrage dans l'une sélectionnée des 24 positions possibles sur la bride annulaire pour compenser le balourd de la pièce.

D'autres détails, caractéristiques et avantages de l'invention apparaîtront à la lecture de la description suivante faite à titre d'exemple non limitatif en référence aux dessins annexés dans lesquels :
- la figure 1 est une vue schématique partielle en coupe axiale d'une turbine basse-pression d'un turboréacteur ;
- la figure 2 est une vue schématique partielle en perspective d'une bride annulaire d'un disque de rotor de turbine basse-pression selon l'invention ;
- la figure 3 est une vue schématique en perspective d'une masse d'équilibrage selon l'invention ;
- la figure 4 est une vue schématique en perspective des moyens de verrouillage de la masse d'équilibrage selon l'invention ;
- la figure 5 est une vue schématique partielle en perspective illustrant différentes étapes de positionnement, d'accrochage et de verrouillage de la masse d'équilibrage selon l'invention.

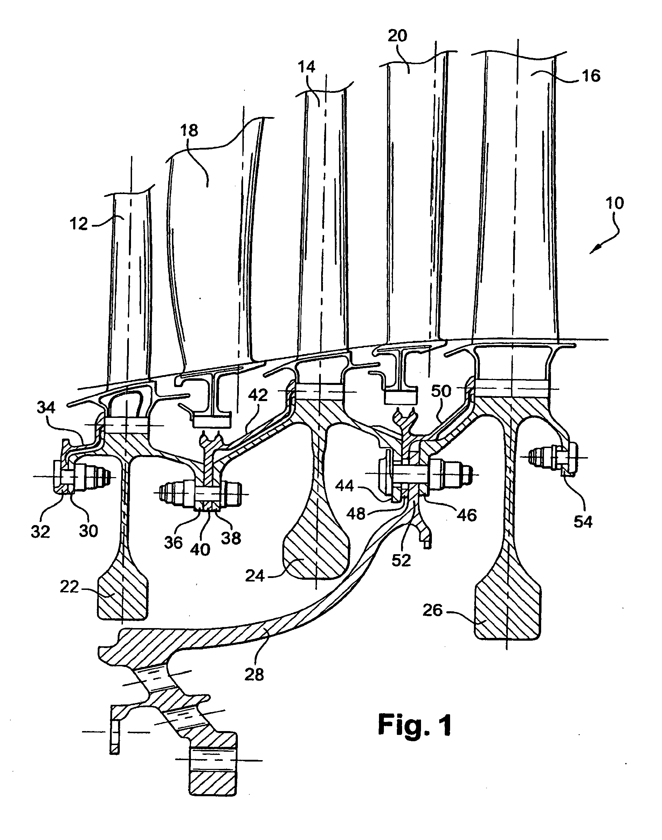

La figure 1 est une vue partielle d'une turbine basse-pression 10 d'un turboréacteur, comprenant trois étages d'aubes mobiles 12, 14, 16 et deux étages d'aubes fixes 18, 20.

Les aubes fixes 18, 20 sont montées par des moyens non représentés, à leurs extrémités radialement externes sur un carter du turboréacteur, et les aubes mobiles 12, 14, 16 sont montées par des moyens appropriés, par exemple à queue d'aronde ou analogue, à leurs extrémités radialement internes sur trois disques 22, 24, 26 du rotor.

Chaque disque 22, 24, 26 comprend une bride annulaire amont et une bride annulaire aval, ces brides servant à la fixation des disques entre eux et sur un cône d'entraînement 28 relié à l'arbre du turboréacteur ainsi qu'à la fixation de flasques annulaires de retenue des pieds d'aubes sur les disques.

Plus précisément, le disque amont 22 comprend une bride annulaire amont 30 sur laquelle sont fixées par boulonnage une bride annulaire 32 d'un flasque 34 de retenue des pieds des aubes 12 sur le disque amont 22 et au moins une masse d'équilibrage, et une bride annulaire aval 36 fixée par boulonnage à une bride annulaire amont 38 du disque intermédiaire 24 et à une bride annulaire 40 d'un flasque 42 de retenue des pieds des aubes 14 sur le disque intermédiaire 24.

Le disque intermédiaire 24 comprend une bride annulaire aval 44 fixée par boulonnage à une bride annulaire amont 46 du disque aval 26 ainsi qu'à une bride annulaire 48 d'un flasque 50 de retenue des pieds des aubes 16 sur le disque aval 26 et à une bride annulaire 52 du cône d'entraînement 28.

Le disque aval 26 comprend une bride annulaire aval 54, sur laquelle on peut fixer par boulonnage au moins une masse d'équilibrage.

En raison de leur fixation par serrage d'écrous, ce qui nécessite l'utilisation d'un outil de maintien d'écrou, les masses d'équilibrage sont rapportées sur la bride annulaire amont 30 du disque amont 22 et sur la bride annulaire aval 54 du disque aval 26, les espaces compris entre la bride 30 et le disque 22, et entre le disque 26 et la bride 54 permettant la mise en place d'un outil de maintien d'écrou.

Cela se traduit par un encombrement axial relativement important en amont de la turbine, qui gêne notamment l'intégration du distributeur (non représenté) en amont du disque 22.

Ce problème est résolu par l'invention grâce à un dispositif qui permet de monter une masse d'équilibrage sur une bride annulaire d'un disque de rotor, telle que la bride annulaire amont 30 du disque amont 22, sans utiliser de boulon et d'écrou, par accrochage de la masse d'équilibrage sur ladite bride annulaire, puis par verrouillage de la masse d'équilibrage sur cette bride au moyen d'une pièce unique.

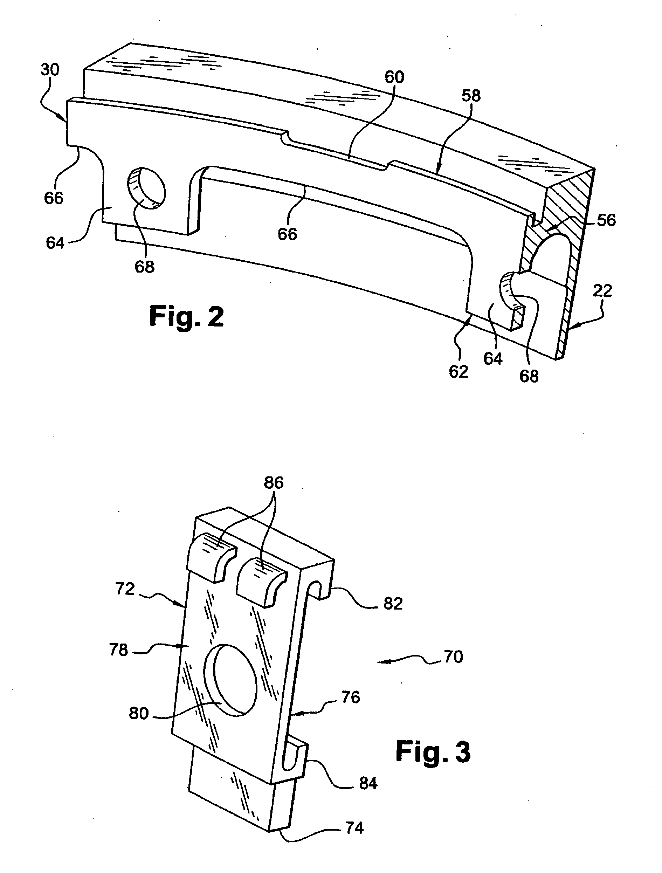

Selon l'invention, la bride annulaire amont 30, partiellement représentée en figure 2, est raccordée au disque amont 22, lui aussi partiellement représenté, au moyen d'un pont annulaire cylindrique 56 de faible longueur axiale.

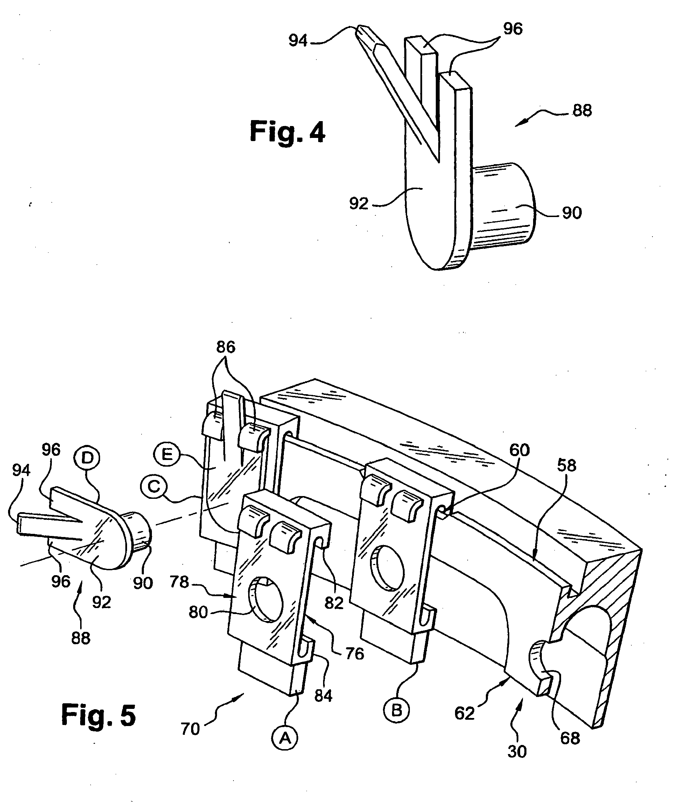

La bride annulaire 30 comprend deux bords périphériques 58, 62 concentriques. Le bord 58 radialement externe par rapport au pont 56, comprend une interruption ou encoche 60 permettant la mise en place et l'engagement de la masse d'équilibrage, comme cela sera décrit plus en détail dans ce qui suit en référence à la figure 5, et le bord périphérique 62 radialement interne par rapport au pont 56, est « festonné » ou crénelé, c'est-à-dire présente des parties pleines 64 formées en alternance avec des parties creuses 66 régulièrement réparties sur la bride annulaire 30, ces parties pleines 64 comportant des orifices cylindriques 68 de passage des moyens de verrouillage de la masse d'équilibrage, ces orifices étant par exemple au nombre de 24, répartis sur le tour de la bride 30.

La masse d'équilibrage 70, représentée en figure 3, comprend une plaque plate rectangulaire 72 et un appendice rectangulaire 74 raccordé au bord inférieur de la plaque 72, cet appendice 74 étant interchangeable et / ou taillable pour adapter la masse d'équilibrage 70 au balourd à compenser. Typiquement, cette masse est comprise entre 1 et 10g.

La plaque 72 de la masse d'équilibrage 70 comprend deux grandes faces 76, 78 et un orifice cylindrique 80 de passage des moyens de verrouillage de la masse d'équilibrage, cet orifice étant formé sensiblement au milieu de la plaque 72.

La face 76 de la plaque 72, destinée à venir en appui sur la bride annulaire, comprend un crochet en L 82 formé à son extrémité supérieure sur toute sa largeur et orienté vers son extrémité inférieure, et un crochet en L 84 formé à son extrémité inférieure sur toute sa largeur et orienté vers son extrémité supérieure.

La face 78 de la plaque 72, destinée à recevoir les moyens de verrouillage, comprend deux crochets en L 86 parallèles et voisins, formés à son extrémité supérieure et orientés vers son extrémité inférieure.

Les moyens de verrouillage, représentés en figure 4, sont formés d'une pièce unique 88 comportant un pion cylindrique 90 destiné à s'engager dans les orifices de passage 80, 68 de la masse d'équilibrage 70 et de la bride annulaire 30 respectivement, et une tête plate transversale 92 à une extrémité du pion cylindrique 90 et destinée à venir en appui sur la face 78 de la plaque 72 de la masse d'équilibrage 70.

La tête plate 92 des moyens de verrouillage 88, comprend une patte transversale dans laquelle est formée par découpe, une languette 94 pliée à 30° environ du côté opposé au pion cylindrique 90. La partie restante 96 non pliée de la patte est destinée à s'engager sous un crochet en L 86 précité de la face 78 de la masse d'équilibrage 70. En figure 4, on a représenté une réalisation dans laquelle une languette 94 est formée par découpe entre deux parties 96 d'engagement sous les crochets 86 précités.

La figure 5 représente schématiquement les différentes étapes de montage de la masse d'équilibrage 70 sur une bride annulaire 30.

Dans cette figure, la masse d'équilibrage 70 est représentée dans trois positions différentes : une première A où cette masse est présentée devant une interruption ou encoche 60 de la bride annulaire 30, puis une deuxième B où elle est engagée sur la bride, jusqu'au contact de sa face 76 sur la bride 30, et une troisième C où elle est amenée par translation circonférentielle autour de l'axe du rotor de la turbine jusqu'à ce que les bords périphériques 58, 62 de la bride annulaire 30 soient engagés dans les crochets en L 82, 84 de la masse d'équilibrage 70 et que l'orifice 80 de la masse d'équilibrage 70 soit aligné axialement avec un orifice 68 de la bride 30, correspondant au point où la masse d'équilibrage doit être fixée pour compenser le balourd.

Le verrouillage de la masse d'équilibrage 70 sur la bride annulaire 30, est réalisé au moyen de la pièce unique 88 représentée dans deux positions différentes : une D où le pion cylindrique 90 est aligné axialement avec les orifices 80, 68 de la masse d'équilibrage 70 et de la bride annulaire 30, la languette 94 de la tête transversale 92 étant orientée tangentiellement à la circonférence de la bride 30, pour permettre à la tête transversale 92 de venir en appui sur la face 78 de la masse d'équilibrage 70, et une seconde position E où la tête transversale 92 a été tournée autour de l'axe du pion 90, jusqu'à ce que ses parties 96 s'engagent sous les crochets 86 pour bloquer axialement la pièce 88 sur la masse d'équilibrage 70, et la languette 94 étant alors rabattue entre les crochets 86 précités pour immobiliser la pièce 88 en rotation autour de l'axe du pion 90.

En position de blocage, la languette 94 fait saillie au-delà des crochets 86 de la masse d'équilibrage 70, ce qui facilite le démontage des moyens de verrouillage 88 par retour de la languette 94 en position inclinée.

Le déplacement de la languette 94 entre ses deux positions se fait par déformation plastique. Dans la position E, les forces centrifuges agissant sur la languette lors du fonctionnement de la turbine, tendent à maintenir cette languette en position de verrouillage.

De plus, lors du fonctionnement de la turbine, la masse d'équilibrage subit ces forces centrifuges qui la poussent radialement vers l'extérieur. Pour éviter le cisaillement du pion 90 des moyens de verrouillage 88, celui-ci est monté serré dans l'orifice 68 de la bride annulaire 30 et avec jeu dans l'orifice 80 de la masse d'équilibrage 70.

En fonction des besoins, on monte une ou plusieurs masses d'équilibrage 70 sur la bride annulaire 30 du disque amont 22. On peut monter également une ou plusieurs masses d'équilibrage de façon semblable sur la bride annulaire aval 54 du disque aval 26.

L'invention est applicable de façon générale à la fixation de masses d'équilibrage sur toute pièce tournante et en particulier, mais non exclusivement, sur un disque de rotor de turbine basse-pression dans un turboréacteur.

## Revendications

1. Dispositif d'équilibrage d'une pièce en rotation, en particulier d'un rotor de turbine (10) dans une turbomachine telle qu'un turboréacteur, ce dispositif comprenant au moins une masse d'équilibrage (70) montée sur une bride annulaire (30) de la pièce et des moyens de fixation de la masse d'équilibrage (70) sur ladite bride annulaire (30), **caractérisé en ce que** la masse d'équilibrage (70) comprend sur sa face (76) tournée vers la bride annulaire (30), au moins un crochet en L (82, 84) d'engagement sur un rebord annulaire (58, 62) de la bride annulaire (30), et **en ce que** des moyens de verrouillage (88) sont rapportés sur la masse d'équilibrage (70) et coopèrent avec la masse d'équilibrage etla bride annulaire (30) pour immobiliser la masse d'équilibrage (70) sur la bride annulaire (30) et pour se bloquer en rotation et en translation axiale sur la masse d'équilibrage (70).

2. Dispositif selon la revendication 1, **caractérisé en ce que** la masse d'équilibrage (70) comprend, à ses extrémités radialement interne et externe, des crochets en L (82, 84) orientés l'un vers l'autre et destinés à s'engager sur deux rebords annulaires (58, 62) concentriques de ladite bride annulaire (30).

3. Dispositif selon la revendication 2, **caractérisé en ce qu'**au moins l'un des rebords annulaires (58) comprend une interruption ou une encoche (60) permettant la mise en place et l'engagement de la masse d'équilibrage (70) sur la bride annulaire (30) par translation axiale.

4. Dispositif selon l'une des revendications précédentes, **caractérisé en ce que** les moyens de verrouillage (88) sont rapportés sur la masse d'équilibrage (70) et comprennent un pion cylindrique (90) destiné à s'engager axialement dans un orifice (80) de la masse d'équilibrage (70) et dans un orifice (68) correspondant de la bride annulaire (30), et des moyens (94, 96) d'immobilisation axiale et en rotation sur la masse d'équilibrage (70).

5. Dispositif selon la revendication 4, **caractérisé en ce que** les moyens d'immobilisation en rotation comprennent une languette (94) déformable destinée à être engagée, par déplacement dans une direction parallèle à l'axe de rotation de la pièce, entre deux butées (86) voisines formées sur la masse d'équilibrage (70).

6. Dispositif selon la revendication 5, **caractérisé en ce que** les moyens de verrouillage (88) comprennent une tête plate transversale (92) formée à une extrémité du pion (90) et destinée à venir en appui sur la masse d'équilibrage (70) et à s'engager par rotation autour de l'axe du pion (90) sous un rebord (86) de la masse d'équilibrage, pour former les moyens d'immobilisation axiale précités de la masse d'équilibrage (70).

7. Dispositif selon la revendication 6, **caractérisé en ce que** la languette (94) précitée est formée par une découpe de la tête plate (92) du pion cylindrique (90).

8. Dispositif selon l'une des revendications 5 à 7, **caractérisé en ce que** la tête plate (92) comprend au moins une patte (96) voisine de la languette (94) précitée et coopérant avec un crochet en L (86) formé sur la masse d'équilibrage (70).

9. Dispositif selon la revendication 8, **caractérisé en ce que** le verrouillage de la masse d'équilibrage (70) sur la bridé annulaire (30) est réalisé par rotation du pion cylindrique (90) autour de son axe, jusqu'à une position de blocage où la tête du pion (92) est insérée sous le rebord (86) de la masse d'équilibrage (70), la languette (94) étant ensuite engagée entre les deux butées (86) voisines de la masse d'équilibrage (70).

10. Dispositif selon une des revendications 5 à 8, **caractérisé en ce que** la languette (94) a une longueur suffisante pour faire saillie au-delà des butées (86) de la masse d'équilibrage (70) en position de blocage, pour faciliter le démontage des moyens de verrouillage (88) par retour de la languette dans sa position initial.

11. Dispositif selon la revendication 9, **caractérisé en ce que** le pion (90) des moyens de verrouillage (88) est monté serré dans l'orifice (68) de la bride annulaire (30) précitée et avec jeu dans l'orifice (80) de la masse d'équilibrage (70).

12. Dispositif selon l'une des revendications précédentes, **caractérisé en ce que** la bride annulaire (30) comprend un nombre prédéterminé d'orifices (68) de montage d'une masse d'équilibrage (70), ce nombre étant par exemple de 24, ces orifices étant répartis de façon régulière sur la bride annulaire (30).

13. Dispositif selon l'une des revendications précédentes, **caractérisé en ce qu'**il est utilisé pour le montage d'au moins une masse d'équilibrage (70) sur une bride annulaire amont (30) d'un disque amont (22) de rotor de turbine basse-pression (10) dans un turboréacteur, et ou pour le montage d'au moins une masse d'équilibrage (70) sur une bride annulaire aval (54) d'un disque aval (26) dudit rotor.

## Patentansprüche

1. Ausgleichsvorrichtung für ein rotierendes Bauteil, insbesondere für einen Turbinenrotor (10) in einer Turbomaschine bzw. einem Turbotriebwerk, wie etwa einem Turbostrahltriebwerk, wobei diese Vorrichtung zumindest eine Ausgleichsmasse (70) aufweist, die an einem ringförmigen Flansch (30) des Bauteils angebracht ist, sowie Befestigungsmittel zum Befestigen der Ausgleichsmasse (70) an den ringförmigen Flansch (30), **dadurch gekennzeichnet, dass** die Ausgleichsmasse (70) an ihrer dem ringförmigen Flansch (30) zugewandten Seite (76) zumindest einen L-förmigen Eingriffshaken (82, 84) zum Eingreifen an einer ringförmigen Randleiste (58, 62) des ringförmigen Flansches (30) aufweist, und dass Verriegelungsmittel (88) an die Ausgleichsmasse (70) angesetzt sind und mit der Ausgleichsmasse und dem ringförmigen Flansch (30) zusammenwirken, um die Ausgleichsmasse (70) am ringförmigen Flansch (30) festzulegen und drehfest und axial verschiebefest an der Ausgleichsmasse (70) zu sichern.

2. Vorrichtung nach Anspruch 1, **dadurch gekennzeichnet, dass** die Ausgleichsmasse (70) an ihrem radial inneren und radial äußeren Ende L-förmige Haken (82, 84) aufweist, die zueinander gerichtet und dazu bestimmt sind, an zwei ringförmigen, konzentrischen Randleisten (58, 62) des ringförmigen Flansches (30) einzugreifen.

3. Vorrichtung nach Anspruch 2, **dadurch gekennzeichnet, dass** zumindest eine der ringförmigen Randleisten (58) eine Unterbrechung bzw. eine Einkerbung (60) aufweist, welche das Einsetzen und Eingreifen der Ausgleichsmasse (70) an den ringförmigen Flansch (30) durch axiales Verschieben gestattet.

4. Vorrichtung nach einem der vorangehenden Ansprüche, **dadurch gekennzeichnet, dass** die Verriegelungsmittel (88) an die Ausgleichsmasse (70) angesetzt sind und einen zylindrischen Zapfen (90) aufweisen, der dazu bestimmt ist, axial in eine Öffnung (80) der Ausgleichsmasse (70) und in eine entsprechende Öffnung (68) des ringförmigen Flansches (30) einzugreifen, sowie Mittel (94, 96) zum axialen und drehsicheren Festlegen an der Ausgleichsmasse (70).

5. Vorrichtung nach Anspruch 4, **dadurch gekennzeichnet, dass** die Mittel zum drehsicheren Festlegen zumindest eine verformbare Zunge (94) aufweisen, die dazu bestimmt ist, durch Verlagerung in einer zur Rotationsachse des Bauteils parallelen Richtung zwischen zwei benachbarten Anschlägen (86) einzugreifen, die an der Ausgleichsmasse (70) ausgebildet sind.

6. Vorrichtung nach Anspruch 5, **dadurch gekennzeichnet, dass** die Verriegelungsmittel (8) einen quer verlaufenden Flachkopf (92) aufweisen, der am Ende des Zapfens (90) ausgebildet und dazu bestimmt ist, in Anlage an die Ausgleichsmasse (70) zu gelangen und durch Drehung um die Achse des Zapfens (90) unter eine Randleiste (86) der Ausgleichsmasse einzugreifen, um die vorgenannten Mittel zum axialen Festlegen der Ausgleichsmasse (70) zu bilden.

7. Vorrichtung nach Anspruch 6, **dadurch gekennzeichnet, dass** die vorgenannte Zunge (94) durch einen Einschnitt des Flachkopfs (92) des zylindrischen Zapfens (90) gebildet ist.

8. Vorrichtung nach einem der Ansprüche 5 bis 7, **dadurch gekennzeichnet, dass** der Flachkopf (92) zumindest eine Lasche (96) aufweist, die der vorgenannten Zunge (94) benachbart ist und mit einem L-förmigen Haken (86) zusammenwirkt, die an der Ausgleichsmasse (70) ausgebildet ist.

9. Vorrichtung nach Anspruch 8, **dadurch gekennzeichnet, dass** die Verrieglung der Ausgleichsmasse (70) an dem ringförmigen Flansch (30) durch Drehung des zylindrischen Zapfens (90) um seine Achse herum bis zu einer Sicherungsstellung erfolgt, wo der Kopf des Zapfens (92) unter die Randleiste (86) der Ausgleichsmasse (70) eingefügt ist, wobei die Zunge (94) dann zwischen die beiden benachbarten Anschläge (86) der Ausgleichsmasse (70) eingreift.

10. Vorrichtung nach einem der Ansprüche 5 bis 8, **dadurch gekennzeichnet, dass** die Zunge (94) eine ausreichende Länge aufweist, um in Sicherungsstellung über die Anschläge (86) der Ausgleichsmasse (70) hinaus vorzuspringen, um das Lösen der Verriegelungsmittel (88) durch Rückstellen der Zunge in ihre Ausgangsstellung zu erleichtern.

11. Vorrichtung nach Anspruch 9, **dadurch gekennzeichnet, dass** der Zapfen (90) der Verriegelungsmittel (88) in der Öffnung (68) des vorgenannten ringförmigen Flansches (30) eingespannt und in der Öffnung (80) der Ausgleichsmasse (70) mit Spiel montiert ist.

12. Vorrichtung nach einem der vorangehenden Ansprüche, **dadurch gekennzeichnet, dass** der ringförmige Flansch (30) eine vorbestimmte Anzahl an Öffnungen (68) zum Montieren einer Ausgleichsmasse (70) aufweist, wobei diese Anzahl beispielsweise 24 beträgt, wobei diese Öffnungen gleichmäßig über den ringförmigen Flansch (30) verteilt sind.

13. Vorrichtung nach einem der vorangehenden Ansprüche, **dadurch gekennzeichnet, dass** sie zum Montieren zumindest einer Ausgleichsmasse (70) an einem stromaufwärtigen ringförmigen Flansch (30) einer stromaufwärtigen Rotorscheibe (22) eines Turbinenrotors (10) einer Niederdruckturbine bei einem Turbostrahltriebwerk und/oder zum Montieren zumindest einer Ausgleichsmasse (70) an einem stromabwärtigen ringförmigen Flansch (54) einer stromabwärtigen Rotorscheibe (26) des genannten Rotors verwendet wird.

## Claims

1. A device for balancing a rotating part, in particular a turbine rotor (10) in a turbomachine such as a turbojet, the device comprising at least one balance weight (70) mounted on an annular flange (30) of the part, and fastener means for fastening the balance weight (70) on said annular flange (30), the device being **characterized in that** the balance weight (70) has on its face (76) facing towards the annular flange (30), at least one L-shaped hook (82, 84) for engaging on an annular rim (58, 62) of said annular flange (30), and **in that** locking means (88) are reported on the balance weight (70) and cooperate with the balance weight and the annular flange (30) to prevent the balance weight (70) from moving relative to the annular flange (30) and to block itself against movement both in rotation and in axial translation relative to the balance weight (70).

2. A device according to claim 1, **characterized in that**, at its radially inner and outer ends, the balance weight (70) has facing L-shaped hooks (82, 84) for engaging on two concentric annular rims (58, 62) of said annular flange (30).

3. A device according to claim 2, **characterized in that** at least one of the annular rims (58) includes an interruption or notch (60) enabling the balance weight (70) to be put into place and engaged on the annular flange (30) by movement in axial translation.

4. A device according to any preceding claim, **characterized in that** the locking means (88) are fitted onto the balance weight (70) and comprise a cylindrical peg (90) for engaging axially in an orifice (80) in the balance weight (70) and in a corresponding orifice (68) in the annular flange (30), together with means (94, 96) for preventing it from moving both axially and in rotation relative to the balance weight (70).

5. A device according to claim 4, **characterized in that** the means for preventing it from moving in rotation comprise a deformable tongue (94) for being engaged by being moved in a direction parallel to the axis of rotation of the part into a position between two adjacent abutments (86) formed on the balance weight (70).

6. A device according to claim 5, **characterized in that** the locking means (88) include a transverse flat head (92) formed at one end of the peg (90) and designed to bear against the balance weight (70) and to become engaged by turning about the axis of the peg (90) under a rim (86) of the balance weight, in order to form the above-mentioned means for preventing it from moving axially relative to the balance weight (70).

7. A device according to claim 6, **characterized in that** the above-mentioned tongue (94) is formed by being cut out from the flat head (92) of the cylindrical peg (90).

8. A device according to any one of claims 5 to 7, **characterized in that** the flat head (92) includes at least one tab (96) adjacent to the above-mentioned tongue (94) for co-operating with an L-shaped hook (86) formed on the balance weight (70).

9. A device according to claim 8, **characterized in that** the balance weight (70) is locked on the annular flange (30) by turning the cylindrical peg (90) about its own axis into a blocking position where the head of the peg (92) is inserted under the rim (86) of the balance weight (70), with the tongue (94) then being engaged between the two adjacent abutments (86) of the balance weight (70).

10. A device according to any one of claims 5 to 8, **characterized in that** the length of the tongue (94) is sufficient to cause it to project beyond the abutments (86) of the balance weight (70) when it is in the blocking position, so as to make it easier to dismantle the locking means (88) by returning the tongue to its initial position.

11. A device according to claim 09, **characterized in that** the peg (90) of the locking means (88) is mounted as a tight fit in the orifice (68) of the above-mentioned annular flange (30) and with clearance in the orifice (80) in the balance weight (70).

12. A device according to any preceding claim, **characterized in that** the annular flange (30) has a predetermined number of orifices for mounting a balance weight (70), said number being equal to 24, for example, said orifices being regularly distributed around the annular flange (30).

13. A device according to any preceding claim, **characterized in that** it is used for mounting at least one balance weight (70) on an upstream annular flange (30) of a upstream disk (22) of a low-pressure turbine rotor (10) in a turbojet, and/or for mounting at least one balance weight (70) on a downstream annular flange (54) of a downstream disk (26) of said rotor.
